# EUROPEAN PATENT APPLICATION

(11) **EP 3 955 524 A1**
(43) Date of publication of application: **16.02.2022**
(21) Application number: 20798154.9
(22) Date of filing: 18.04.2020
(51) Int. Cl.: H04L 12/24

(54) **METHOD FOR MANAGING REMOTE STORAGE DEVICE BY MEANS OF MANAGEMENT DEVICE**

(30) Priority: 30.04.2019 CN 201910367462
(71) Applicant: Huawei Technologies Co., Ltd., Shenzhen, Guangdong 518129 (CN)
(72) Inventor: LI, Chenbo, Shenzhen, Guangdong 518129 (CN)
(74) Representative: Körber, Martin Hans
(86) International application number: PCT/CN2020/085474
(87) International publication number: WO 2020/221033

(57) **Abstract**

Embodiments of the present invention disclose a data transmission method, applied to a first device. The first device is connected to a management device and a second device. The method includes: receiving, by the first device, a first request sent by the management device, where the first request includes a device identifier of the second device; generating a second request based on the first request, and sending the second request to the second device; receiving feedback information generated after the second device executes the second request, and sending the feedback information to the management device. By implementing the embodiments of the present invention, an existing problem can be resolved: Normal service communication and service performance are affected because the management device cannot communicate with the second device and therefore cannot manage the second device.

## Description

### TECHNICAL FIELD

The present invention relates to the field of storage technologies, especially to a method for managing a remote device through a management device.

### BACKGROUND

Currently, a management device is generally used to manage a storage device, for example, configure the storage device, add a user to the storage device, or delete a user from the storage device. For a local storage device, the management device may manage the local storage device and a remote storage device by using a transmission control protocol/internet protocol (transmission control protocol/internet protocol, TCP/IP). However, in an active-active scenario, the remote storage device is usually used as a backup of the local storage device and is not connected to the internet. As a result, the management device cannot manage the remote storage device.

### SUMMARY

Embodiments of the present invention disclose a data transmission method, a related device, and a computer storage medium, to resolve a problem of how a management device manages a storage device when the storage device cannot connect to the management device through the internet.

According to a first aspect, an embodiment of the present invention discloses a data transmission method. The method is applied to a first device, the first device supports can communicate with both a management device and a second device, and the management device and the second device do not communicate with each other. The method includes: The first device receives a first request sent by the management device, where the first request includes a device identifier of the second device. The first device generates a second request based on the first request, and further sends the second request to the second device based on the device identifier of the second device. Then, the second device executes the second request to generate corresponding feedback information, so as to return the feedback information to the first device. The first device receives the feedback information generated after the second device executes the second request, and sends the feedback information to the management device, to notify the management device that a (management) operation requested in the first request has been performed on the second device.

By implementing this embodiment of the present invention, when the management device cannot communicate with the second device, the first device can perform the operation requested in the first request on the second device. In this way, problems in the current technology that the management device cannot manage a device that cannot communicate with the management device and cannot provide normal service communication can be resolved. In addition, when the management device can be connected to the second device, the management device needs to respectively manage the first device and the second device through two interfaces. However, according to the embodiment provided in the present invention, the management device can manage both the first device and the second device on one interface.

With reference to the first aspect, in some possible embodiments, the first device communicates with the management device through a first (communications) protocol, and the first device communicates with the second device through a second (communications) protocol. The first device may convert the first request that is based on the first protocol into the second request of the second protocol. Then, the first device can send the second request of the second protocol to the second device for processing.

By implementing this step, the first device may automatically implement mutual conversion between different protocols, to ensure successful communication between the first device and a device supporting different protocols, so that a normal communication service (or service communication) is not affected.

With reference to the first aspect, in some possible embodiments, the first device encapsulates information in the first request except the device identifier of the second device into a message that is based on the second protocol. The first device further encapsulates the encapsulated message and the device identifier of the second device again into the second request that is based on the second protocol. Then, the first device can send the second request of the second protocol to the second device for processing.

By implementing this step, the first device may encapsulate the first request twice to obtain the second request that is based on the second protocol, so as to ensure security and reliability of data transmission and avoid a case in which the second request is tampered with in a transmission process.

With reference to the first aspect, in some possible embodiments, the first device may encapsulate the information in the first request except the device identifier of the second device into the second request that is based on the second protocol.

By implementing this step, the first device may directly encapsulate the first request once to obtain the second request that is based on the second protocol. In this way, encapsulation time may be reduced, a data transmission procedure may be accelerated, and data transmission efficiency may be improved.

With reference to the first aspect, in some possible embodiments, after the first device sends the second request that is based on the second protocol to the second device, the second device may execute the second request and generate the corresponding feedback information. Further, the second device adds the feedback information to a second response that is based on the second protocol and sends the feedback information to the first device. In other words, the second response carries the feedback information generated after the second device executes the second request. Correspondingly, the first device receives the second response that is based on the second protocol, converts the second response that is based on the second protocol into a first response that is based on the first protocol, and further sends the first response to the management device, to return the feedback information to the management device.

By implementing this step, the first device may automatically implement mutual conversion between protocols, to ensure normal communication between the devices, so that a normal communication service (or service communication) is not affected.

According to a second aspect, an embodiment of the present invention provides a first device. The device includes a functional module or a unit configured to perform the method described in any one of the first aspect or the possible implementations of the first aspect.

According to a third aspect, an embodiment of the present invention provides another first device, including a processor, a memory, a communications interface, and a bus. The processor, the communications interface, and the memory communicate with each other through the bus. The communications interface is configured to receive and send data. The memory is configured to store instructions. The processor is configured to invoke the instructions in the memory, to perform the method in any one of the first aspect or the possible implementations of the first aspect.

According to a fourth aspect, an embodiment of the present invention provides a communications system, including a management device, a first device, and a second device, where the first device separately communicates with the management device and the second device. The management device is configured to manage the first device and the second device, and the first device is configured to perform the method described in any one of the first aspect or the possible implementations of the first aspect.

According to a fifth aspect, a computer non-transitory (non-transitory) storage medium is provided. The computer non-transitory storage medium stores program code used for data transmission. The program code includes instructions used to perform the method in any one of the first aspect or the possible implementations of the first aspect.

According to a sixth aspect, a chip product is provided, to perform the method in any one of the first aspect or the possible implementations of the first aspect.

On the basis of the implementations provided in the foregoing aspects, the implementations may be further combined to provide more implementations in the present invention.

### BRIEF DESCRIPTION OF DRAWINGS

To describe the technical solutions in the embodiments of the present invention or in the current technology more clearly, the following briefly describes the accompanying drawings for describing the embodiments or the prior art.
FIG. 1 is a schematic structural diagram of a data storage system according to an embodiment of the present invention;
FIG. 2 is a schematic flowchart of a data transmission method according to an embodiment of the present invention;
FIG. 3 is a schematic diagram of a TLV message encapsulation format according to an embodiment of the present invention;
FIG. 4A to FIG. 4B are a schematic diagram of two formats of a second request according to an embodiment of the present invention;
FIG. 5A to FIG. 5B are a schematic diagram of two formats of a second response according to an embodiment of the present invention;
FIG. 6 is a schematic diagram of a user interaction interface according to an embodiment of the present invention;
FIG. 7 is a schematic structural diagram of another first device according to an embodiment of the present invention; and
FIG. 8 is a schematic structural diagram of still another first device according to an embodiment of the present invention.

### DESCRIPTION OF EMBODIMENTS

The following describes the embodiments of the present invention with reference to accompanying drawings.

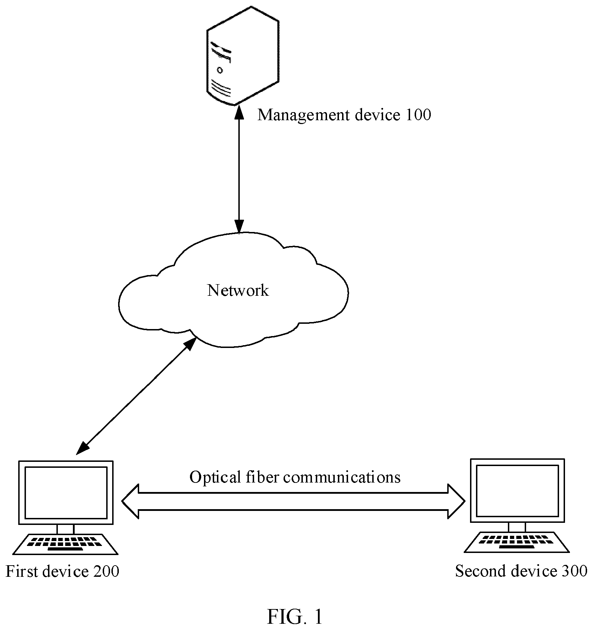

This application particularly provides a data transmission method, and a related device and system to which the method is applicable. FIG. 1 is a schematic structural diagram of a data management system according to an embodiment of the present invention. The data management system shown in FIG. 1 includes a management device 100, a first network device 200, and a second network device 300. Quantities of first devices 200 and second devices 300 are not limited, and one first device and one second device are used as an example in FIG. 1.

The management device 100 is configured to manage the first device 200 and the second device 300, for example, send a request message to the first device or the second device, to perform, on the first device, an operation (namely, a management operation) requested in the request message. In this application, an example in which a local device is the first device and a remote device is the second device is used herein. The management device 100 may communicate with the first device 200 through the internet or a local area network.

The management device 100 may be connected to the second device 200 through the internet. However, the second device is generally used only as a backup of the first device, and the second device does not access the internet. In this case, when the second device does not access the internet, the management device 100 cannot manage the second device.

The first device 200 separately communicates with the management device 100 and the second device 300. A first device 104 and a second device 106 may communicate with each other through a protocol such as a fibre channel (fibre channel, FC) or fibre channel over Ethernet (fibre channel over ethernet, FCoE).

In an actual application, the management device 100 may include but is not limited to a smartphone (such as an Android mobile phone or an iOS mobile phone), a personal computer, a tablet computer, a palmtop computer, a mobile internet device (mobile internet devices, MID), a wearable intelligent device, or another device that supports network communication. The first device 200 or the second device 300 may be specifically a storage device, for example, a storage array.

An embodiment of the present invention provides a method for managing a second device when the management device is not connected to the second device through the internet.

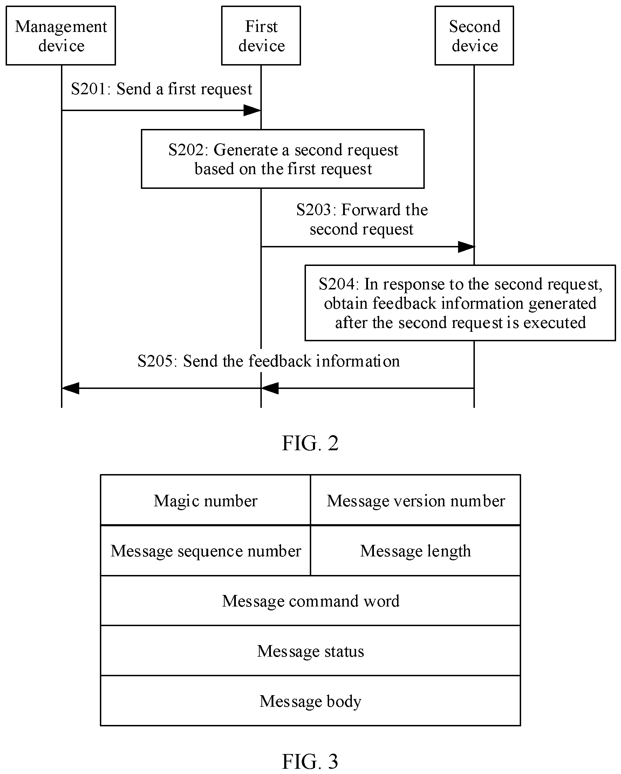

As shown in FIG. 2, the management method includes the following implementation steps:

Step S201: A management device sends a first request to a first device, where the first request carries a device identifier of a second device and is used to indicate the second device to perform a corresponding operation, for example, add, delete, modify, or search user information, or search alarm information of the second device.

In this application, when the management device needs to manage the second device, because there is no TCP/IP network between the management device and the second device, the management device communicates with the second device through the first device. Specifically, the management device may indicate, by sending the first request, the second device to perform an operation, for example, add, delete, modify, or search user information in the second device. In addition to the device identifier of the second device, optionally, the first request may further carry other information, for example, a timeout delay required in the first request, a device identifier of the management device, a network address of the management device, and information related to an operation indicated by the first request.

Step S202: After receiving the first request, the first device generates a second request based on the first request.

In this embodiment of the present invention, the management device communicates with the first device through a first (communications) protocol, for example, a TCP/IP protocol, and the first device communicates with the second device through a second (communications) protocol, for example, an FC or FCoE protocol. In this way, after receiving the first request sent by the management device, the first device needs to convert the first request that is based on the first protocol into the second request that is based on the second protocol, so as to send the second request to the second device for processing. The following describes two specific implementations related to step S202.

Implementation 1, the first device may directly encapsulate information in the first request except the device identifier of the second device into the second request that is based on the second protocol, to reduce encapsulation time and improve message transmission efficiency while message transmission security is ensured.

Implementation 2, the first device encapsulates information in the first request except the second device into a message that is based on the second protocol. Further, the first device encapsulates the encapsulated message and the device identifier of the second device again into the second request that is based on the second protocol, to send the second request to the second device for processing. Two encapsulations may be defined in a protocol, to implement that the management device sends a request message to the second device through the first device. In addition, reliability and security of message transmission are ensured, and a probability that valid data in the request is tampered with is reduced.

In this embodiment of the present invention, an example in which the first request is encapsulated into a second request in a TLV message format is used for description. FIG. 3 is a schematic diagram of a possible TLV message format. As shown in FIG. 3, the TLV message format includes a message command word and a message body, and optionally, may further include another customized field. For example, FIG. 3 further includes a magic number, a message version number, a message sequence number, a message length, the message command word, a message status, and the message body. Optionally, a destination device identifier may be further included. A size of bits occupied by the TLV message format and a size of bits occupied by each field in the format are not limited.

The message command word is used to indicate a meaning of the TLV message, that is, indicate an operation performed by a device that receives the TLV message. For example, querying of a device alarm is indicated. The message command word is used to indicate the device that receives the TLV message to query alarm information of the device, for example, query an alarm generated due to poor heat dissipation or excessively high temperature of the device.

The message sequence number is used to indicate a number of the TLV message, to distinguish the TLV message. The magic number is used to verify whether the message is correct. Generally, the magic number is represented by a serial number and a network address of a device. Correspondingly, the device that receives the TLV message may parse the magic number in the TLV message and compare the magic number in the TLV message with information of the device, to identify whether the TLV message is correct. In an example in which the magic number is the sequence number of the device, the receiving device that receives the TLV message obtains the sequence number of the device by parsing the magic number in the TLV message, and compares the sequence number of the device in the magic number with the sequence number of the receiving device. If the sequence numbers are consistent, it may be determined that the TLV message is correct, and no transmission error occurs.

The message version number is used to indicate a version number of the TLV message. The message length is used to indicate a length or a size of the TLV message. The message status is used to indicate a status of the TLV message. The status is defined in a system, for example, the status may include a sent state, indicating that the TLV message has been sent; a received state, indicating that the TLV message is received by the device; and a timeout state, indicating that transmission of the TLV message has timed out. Generally, different message statuses may be expressed in different manners. For example, "0" represents the sent state, "1" represents the received state, and "2" represents the timeout state. The message body is used to carry data that needs to be sent through the TLV message, for example, a queried remote device alarm or user information of a user to be added. The destination device identifier is used to indicate a destination device to which the TLV message needs to be sent.

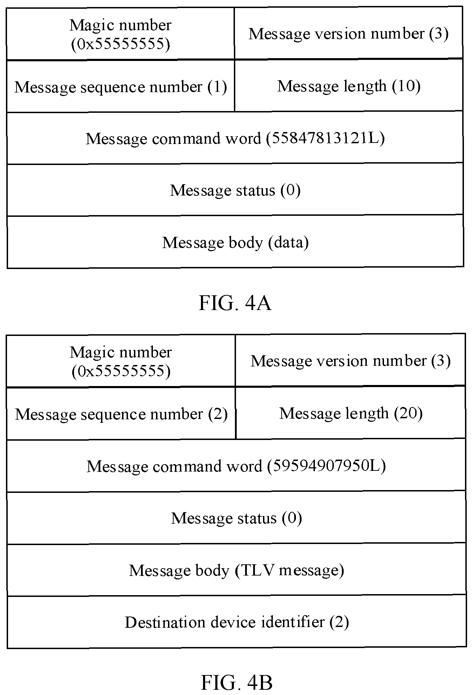

An example in which the first request is a representational state transfer (Representational State Transfer, rest) request is used. The rest request carries the device identifier of the second device, and is used to request to query an alarm of the second device. In an actual application, the management device delivers the rest request to the first device by using a get method specified in a rest protocol. After receiving the first request, when the first device obtains, through parsing, that the first request includes the device identifier of the second device, the first device may determine that the first request is used to access the second device. However, because a communications protocol between the management device and the first device is different from a communications protocol between the first device and the second device, to send the first request to the second device, the first device needs to convert the first request into the second request that can be transmitted between the first device and the second device. In a first encapsulation manner, the first device may encapsulate information in the rest request except the device identifier of the second device into a message that meets the TLV message format shown in FIG. 3, that is, the TLV message forms the second request. For example, through parsing the first request, following pieces of information are obtained as follows: a magic number of 0x55555555, a message version number of 3, a message sequence number of 1, a message length of 10, a message command word of 55847813121L, used to indicate to query a device alarm, a message status of 0, which indicates that the TLV message has been sent, and a message body of data, which indicates to query related information related to the device alarm, the second request generated after the TLV message is encapsulated is shown in FIG. 4A.

In a second encapsulation manner, to ensure reliability and security of data transmission, after information except the device identifier of the second device is encapsulated into the TLV message, the encapsulated TLV message and the device identifier of the second device may be further encapsulated again to form the second request. Specifically, the first device may encapsulate the information in the first request except the device identifier of the second device into a TLV message that is to be sent to the second device. Further, the first device may encapsulate the TLV message and the device identifier of the second device again into a to-be-sent TLV message of a local end device (namely, the first device here). In other words, in two encapsulation processes, a first encapsulation is to encapsulate information that is in the first request and that needs to be sent to the second device, and a second encapsulation is to encapsulate a TLV message encapsulated in the first encapsulation into information about the first device again, so as to send to the second device for processing. For example, a second request formed after the second encapsulation is shown in FIG. 4B. During the second encapsulation, the TLV message encapsulated in the first encapsulation may be used as a data part (namely, a message body) of a TLV message encapsulated in the second encapsulation. The second request shown in FIG. 4B includes following information: the magic number of 0x55555555, the message version number of 3, a message sequence number of 2, a message length of 20, a message command word of 59594907950L and is used to indicate to forward the second request, and the message status of 0, which indicates that the TLV message has been sent, a message body of a TLV message, and a destination device identifier of 2, indicating the device identifier of the second device.

Step S203: The first device sends the second request to the second device based on the device identifier of the second device.

Step S204: After receiving the second request, the second device parses the second request, obtains related information from the second request to perform an operation indicated by the second request, and generates feedback information based on an execution result.

Specifically, when the second request is a request obtained in the first encapsulation manner, after receiving the second request, the second device may decapsulate the second request once to obtain the operation requested/indicated by the second request, and perform the operation indicated by the second request. When the second request is a request obtained in the second encapsulation manner, after receiving the second request, the second device may decapsulate the second request once to obtain the TLV message, and decapsulate the TLV message to obtain the operation indicated by the second request, and perform the operation indicated by the second request. For example, it may be learned from the message command word that the device alarm needs to be queried, and then related information of the device alarm that needs to be queried is obtained from the data part (namely, the message body), to query and obtain the alarm of the second device from the second device. After the operation is performed, the feedback information indicating that the operation is performed is generated.

Step S205: The second device sends the feedback information to the management device through the first device.

For operations in different requests, the feedback information may be different. For example, if an operation requested in the first request is querying the device alarm, the feedback information is the alarm information of the second device. For another example, if the operation requested in the first request is adding user information, the feedback information may be information used to indicate whether the second device successfully adds the user information. When the operation requested in the first request is querying the user information, the feedback information is the user information queried by the second device.

In an actual application, the feedback information is encapsulated into the TLV message, and a second response is generated. The second response carries information such as a message sequence number and a message command word. The second device sends the second response to the first device. Because the first device communicates with the management device through the first protocol, after receiving the second response, the first device converts the second response into a first response that is based on the first protocol, and sends the first response to the management device. The management device parses the first response, so that the management device may obtain the feedback information of the first request. In this way, even if the second device cannot communicate with the management device through the internet, the management device can manage the second device.

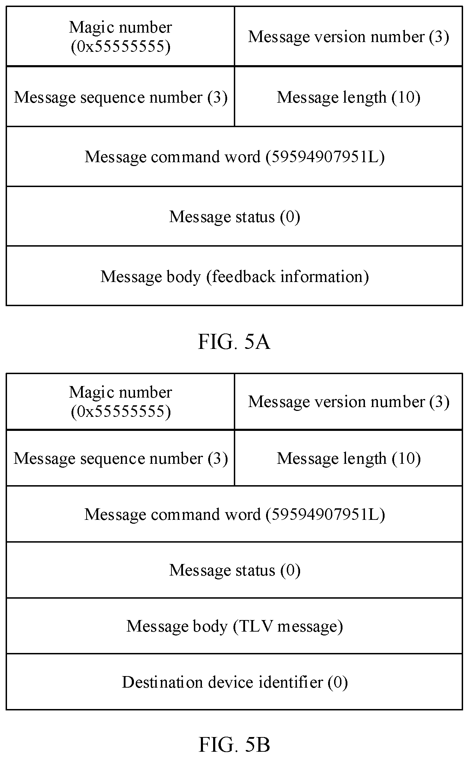

Referring to the second request in the examples described in FIG. 4A or FIG. 4B, FIG. 5A and FIG. 5B shows schematic diagrams of specific encapsulation formats of two second responses. As shown in FIG. 5A, to reduce data encapsulation time, the second response is obtained by the second device by performing TLV message format encapsulation once. The second response may be referred to as a TLV message, and the second response includes following information: a magic number of 0x55555555, a message version number of 3, a message sequence number of 3, a message length of 10, a message command word of 59594907951L and is used to indicate to send the TLV message, a message status of 0, which indicates that the message has been sent, and a message body of data, which indicates to query feedback information of a device alarm.

As shown in FIG. 5B, to improve security and reliability of data transmission, the second response is obtained by the second device by performing the TLV message format encapsulation twice. In a first encapsulation process, the second device may obtain the TLV message shown in FIG. 5A. Further, the second device may encapsulate the TLV message and a device identifier of the management device again to obtain the second response shown in FIG. 5B. As shown in FIG. 5B, the second device encapsulates the TLV message shown in FIG. 5A as a message body again to obtain the second response. The second response includes: the magic number of 0x55555555, the message version number of 3, the message sequence number of 3, the message length of 10, the message command word of 59594907951L and is used to indicate to send the second response, the message status of 0, which indicates that the message has been sent, a message body of a TLV message, namely, the TLV message obtained after encapsulating once in FIG. 5A, and a destination identifier of 0, indicating the management device.

The first device converts the second response that is based on the second protocol into a first response that is based on the first protocol, and a specific implementation is not limited. For example, referring to the foregoing specific implementation in which the first device converts the first request based on the first protocol into the second request that is based on the second protocol, correspondingly, the first device may decapsulate the second response that is based on the second protocol, to obtain the first response that is based on the first protocol. A transmission format of the first response is the same as a transmission format of the first request, that is, communications protocols are the same when the first response and the first request are respectively transmitted.

For example, refer to the foregoing examples in FIG. 5A or FIG. 5B. When the second response is specifically as shown in FIG. 5A, the first device may decapsulate the second response (a TLV response) once, to decapsulate the TLV message format, so as to obtain the first response that is based on the first protocol, for example, a rest response. When the second response is specifically as shown in FIG. 5B, the first device may decapsulate the second response (a TLV response) once to obtain the TLV message, and further decapsulate the TLV message again, so as to obtain the first response that is based on the first protocol, for example, a rest response.

The foregoing mainly describes how the management device manages the second device through the first device if there is no connection between the management device and the second device. However, the management device may manage the second device through the first device if there is connection between the management device and the second device. When the management device is connected to the second device through the internet, when the management device manages the first device and the second device, because the management device is connected to the first device and the second device by using two IP addresses respectively, the first device and the second device are separately managed on two different interfaces. In this way, when data in the first device and the second device needs to be configured at the same time, switching between the two interfaces is required, and this is inconvenient for management. However, in this embodiment of the present invention, the management device manages the second device through the first device. Because an IP address between the management device and the first device is also used for communication between the management device and the second device, only one management interface is required, and related information of the first device and the second device is displayed on the same management interface at the same time.

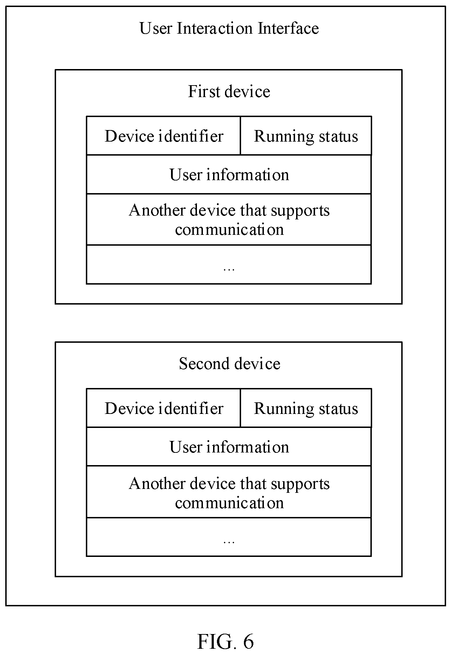

For example, FIG. 6 shows a schematic diagram of a user interaction interface. The user interaction interface shown in FIG. 6 includes device information of the first device and device information of the second device, and the first device and the second device may be managed on the user interaction interface. As shown in FIG. 6, a user performs an operation on the second device on the user interaction interface, to input user information that is of a user A and that needs to be newly added to the second device, and generates a first request. The first request is used to request to add the user information of the user A to the second device. Further, the management device may send, through the first device, the first request to the second device for processing.

According to this embodiment of the present invention, a problem that when a remote device (the second device) cannot be connected to the management device through the internet, the management device cannot manage the second device may be resolved.

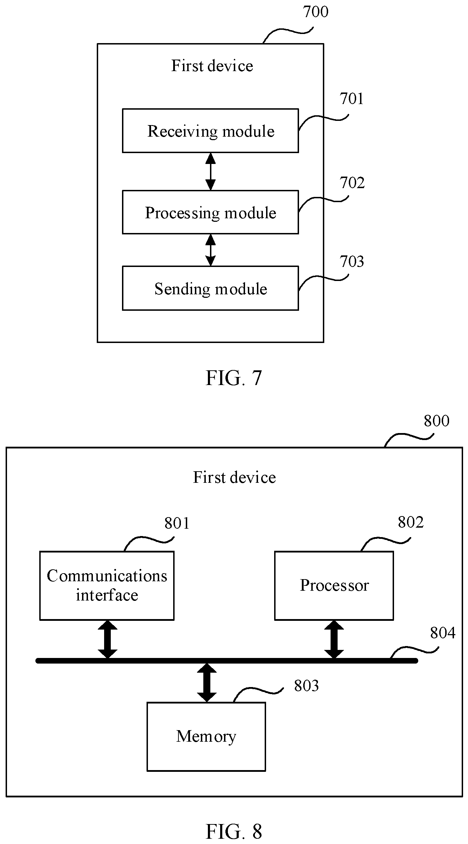

With reference to related descriptions in the embodiments in FIG. 1 to FIG. 6, the following describes a related device and a system in the present invention. FIG. 7 is a schematic structural diagram of a first device according to an embodiment of the present invention. The first device can communicate with a management device and a second device, and the first device 700 shown in FIG. 7 includes a receiving module 701, a processing module 702, and a sending module 703.

The receiving module 701 is configured to receive a first request sent by the management device, and the first request includes a device identifier of the second device.

The processing module 702 is configured to generate, based on the first request, a second request.

The sending module 703 is configured to send the second request to the second device based on the device identifier of the second device.

The receiving module 701 is further configured to receive feedback information generated after the second device executes the second request.

The sending module 703 is further configured to send the feedback information to the management device.

In an actual application, the receiving module 701, the processing module 702, and the sending module 703 in the present invention may be correspondingly configured to implement related steps in the method embodiment shown in FIG. 2 and/or related content described in the text. For example, the receiving module 701 and the processing module 702 may cooperate with each other to jointly implement step S202 in the method embodiment shown in FIG. 2, and the sending module 703 may be configured to implement step S203 in the method embodiment shown in FIG. 2.

In some possible embodiments, the first device 700 communicates with the management device through a first protocol, and the first device 700 communicates with the second device through a second protocol. The processing module 702 is configured to convert the first request that is based on the first protocol into the second request that is based on the second protocol.

In some possible embodiments, the processing module 702 is specifically configured to encapsulate information in the first request except the device identifier of the second device into a message that is based on the second protocol; and encapsulate the encapsulated message that is based on the second protocol and the device identifier of the second device again into the second request that is based on the second protocol.

In some possible embodiments, the processing module 702 is specifically configured to encapsulate the information in the first request except the device identifier of the second device into the second request that is based on the second protocol.

In some possible embodiments, the first device 700 communicates with the management device through the first protocol, and the first device communicates with the second device through the second protocol. The processing module 701 is specifically configured to receive a second response that is based on the second protocol and that is sent by the second device, where the second response carries the feedback information generated after the second device executes the second request. The processing module 702 is further configured to convert the second response that is based on the second protocol into a first response that is based on the first protocol. The sending module 703 is specifically configured to send the first response to the management device, to send the feedback information to the management device.

In an actual application, the modules or units in the first device in this embodiment of the present invention may be specifically implemented by using a software program or hardware. When the present invention is implemented by using a software program, the modules or units in a node are software modules or software units. When the present invention is implemented by using hardware, the modules or units in the node may be implemented by using an application-specific integrated circuit (application-specific integrated circuit, ASIC) or a programmable logic device (programmable logic device, PLD). The foregoing PLD may be a complex program logic device (complex programmable logical device, CPLD), a field-programmable gate array (FPGA), generic array logic (generic array logic, GAL) or any combination thereof. This is not limited in the present invention.

It should be noted that FIG. 7 is merely a possible implementation of the embodiments of the present invention. In an actual application, the first device may further include more or fewer components. This is not limited herein. For content that is not shown or not described in this embodiment of the present invention, refer to related descriptions in the foregoing method embodiments. Details are not described herein again.

By implementing the embodiments of the present invention, an existing problem can be resolved that when the management device cannot communicate with a second device, the management device cannot communicate with the second device and cannot manage the second device, thereby affecting a normal business service and service performance.

FIG. 8 is a schematic structural diagram of another first device according to an embodiment of the present invention. The first device 800 shown in FIG. 8 includes one or more processors 801, a communications interface 802, and a memory 803. The processor 801, the communications interface 802, and the memory 803 may be connected through a bus, or may implement communication by using another means such as wireless transmission. In this embodiment of the present invention, an example in which a bus 804 is used for connection is used. The memory 803 is configured to store instructions, and the processor 801 is configured to execute the instructions stored in the memory 803. The memory 803 stores program code, and the processor 801 may invoke the program code stored in the memory 803 to implement all or some of the implementation steps in FIG. 1 to FIG. 6 in which the first device is an execution body, and/or other content described in the text. Details are not described herein again in the present invention.

Optionally, the processor 801 may include one or more general purpose processors, for example, a central processing unit (central processing unit, CPU). The processor 801 may be configured to run a program of a following function module in related program code. The function module may specifically include but is not limited to any one or a combination of the foregoing receiving module, processing module, and sending module on the first device side. For each function module mentioned in this embodiment of the present invention, refer to related descriptions in the foregoing embodiments. Details are not described herein again.

It should be understood that the communications interface 802 may be a wired interface (for example, an Ethernet interface) or a wireless interface (for example, a wireless fidelity (wireless fidelity, Wi-Fi) interface), and is configured to communicate with another module or apparatus device. For example, the communications interface 802 in this embodiment of the present invention may be specifically configured to receive a first request sent by a management device, or send a second request to a second device.

The memory 803 may include a volatile memory (Volatile Memory), for example, a random access memory (Random Access Memory, RAM). The memory may further include a non-volatile memory (Non-Volatile Memory), for example, a read-only memory (Read-Only Memory, ROM), a flash memory (Flash Memory), a hard disk drive (Hard Disk Drive, HDD), or a solid-state drive (Solid-State Drive, SSD). Alternatively, the memory 803 may include a combination of the foregoing types of memories. The memory may be configured to store a group of program code, to facilitate the processor to invoke the program code stored in the memory, so as to implement functions of each foregoing function module in the embodiment of the present invention.

It should be noted that FIG. 8 is merely a possible implementation of the embodiments of the present invention. In an actual application, the first device may further include more or fewer components. This is not limited herein. For content that is not shown or not described in this embodiment of the present invention, refer to related descriptions in the foregoing method embodiments. Details are not described herein again.

This embodiment of the present invention further provides a communications system. The communications system includes a management device, a first device, and a second device, where the first device separately communicates with the management device and the second device.

The management device is configured to send a first request to the first device, where the first request carries a device identifier of the second device.

The first device receives the first request sent by the management device, generates a second request, and sends the second request to the second device.

The second device executes the second request, generates feedback information, and sends the feedback information to the management device.

For content that is not shown or not described in this embodiment of the present invention, refer to related descriptions in the foregoing embodiments. Details are not described herein again.

This embodiment of the present invention further provides a computer non-transient storage medium. The computer non-transient storage medium stores instructions. When the instructions are run on a processor, the method procedure shown in the embodiment in FIG. 2 is implemented.

This embodiment of the present invention further provides a computer program product. When the computer program product is run on a processor, the method procedure shown in the embodiment in FIG. 2 is implemented.

Methods or algorithm steps described in combination with the content disclosed in this embodiment of the present invention may be implemented by hardware, or may be implemented by a processor by executing a software instruction. The software instruction may include a corresponding software module. The software module may be stored in a random access memory (Random Access Memory, RAM), a flash memory, a read-only memory (Read-Only Memory, ROM), an erasable programmable ROM (Erasable Programmable ROM, EPROM), an electrically EPROM (Electrically EPROM, EEPROM), a register, a hard disk, a removable hard disk, a CD-ROM (CD-ROM), or any other form of storage medium well-known in the art. For example, a storage medium is coupled to a processor, so that the processor can read information from the storage medium or write information into the storage medium. Certainly, the storage medium may be a component of the processor. The processor and the storage medium may be located in the ASIC. In addition, the ASIC may be located in a computing device. Certainly, the processor and the storage medium may exist in the computing device as discrete components.

A person of ordinary skill in the art may understand that all or some of the processes of the methods in the embodiments may be implemented by a computer program by instructing related hardware. The program may be stored in a computer-readable storage medium. When the program is run, the procedures of the methods in the embodiments are performed. The foregoing storage medium includes: any medium that can store program code, such as a ROM, a RAM, a magnetic disk, or an optical disc.

## Claims

1. A data transmission method, applied to a first device, wherein the first device is connected to a management device and a second device, and the method comprises:
receiving a first request sent by the management device, wherein the first request comprises a device identifier of the second device;
generating, based on the first request, a second request that can be transmitted between the first device and the second device;
sending the second request to the second device based on the device identifier of the second device; and
receiving feedback information generated after the second device executes the second request, and sending the feedback information to the management device.

2. The method according to claim 1, wherein the first device communicates with the management device through a first protocol, and the first device communicates with the second device through a second protocol; and
the generating, based on the first request, a second request that can be transmitted between the first device and the second device comprises:
converting the first request that is based on the first protocol into the second request that is based on the second protocol.

3. The method according to claim 2, wherein the converting the first request that is based on the first protocol into the second request that is based on the second protocol comprises:
encapsulating information in the first request except the device identifier of the second device into a message that is based on the second protocol; and
encapsulating the encapsulated message that is based on the second protocol and the device identifier of the second device again into the second request that is based on the second protocol.

4. The method according to claim 2, wherein the converting the first request that is based on the first protocol into the second request that is based on the second protocol comprises:
encapsulating information in the first request except the device identifier of the second device into the second request that is based on the second protocol.

5. The method according to any one of claims 2 to 4, wherein
the receiving feedback information generated after the second device executes the second request, and sending the feedback information to the management device comprises:
receiving a second response that is based on the second protocol and that is sent by the second device, wherein the second response carries the feedback information generated after the second device executes the second request;
converting the second response that is based on the second protocol into a first response that is based on the first protocol; and
sending the first response to the management device, and sending the feedback information to the management device.

6. A first device, wherein the first device is connected to a management device and a second device, and the first device comprises a receiving module, a processing module, and a sending module, wherein
the receiving module is configured to receive a first request sent by the management device, wherein the first request comprises a device identifier of the second device;
the processing module is configured to generate, based on the first request, a second request that can be transmitted between the first device and the second device;
the sending module is configured to send the second request to the second device based on the device identifier of the second device;
the receiving module is configured to receive feedback information generated after the second device executes the second request; and
the sending module is further configured to send the feedback information to the management device.

7. The device according to claim 6, wherein the first device communicates with the management device through a first protocol, and the first device communicates with the second device through a second protocol; and
the processing module is configured to convert the first request that is based on the first protocol into the second request that is based on the second protocol.

8. The device according to claim 7, wherein the processing module is specifically configured to:
encapsulate information in the first request except the device identifier of the second device into a message that is based on the second protocol; and
encapsulate the encapsulated message that is based on the second protocol and the device identifier of the second device again into the second request that is based on the second protocol.

9. The device according to claim 7, wherein the processing module is specifically configured to:
encapsulate information in the first request except the device identifier of the second device into the second request that is based on the second protocol.

10. The device according to any one of claims 7 to 9, wherein
the receiving module is specifically configured to receive a second response that is based on the second protocol and that is sent by the second device, wherein the second response carries the feedback information generated after the second device executes the second request;
the processing module is further configured to convert the second response that is based on the second protocol into a first response that is based on the first protocol; and
the sending module is specifically configured to send the first response to the management device, to send the feedback information to the management device.

11. A first device, comprising a processor, a memory, and a bus, wherein the processor and the memory are connected through the bus, the memory is configured to store instructions, and the processor is configured to invoke the instructions stored in the memory, to perform the method according to any one of claims 1 to 5.

12. A computer non-transitory storage medium, wherein the computer non-transitory storage medium stores a computer program, and when the computer program is executed by a first device, the first device implements the method according to any one of claims 1 to 5.
